# EUROPEAN PATENT APPLICATION

(11) **EP 1 256 412 A1**
(43) Date of publication of application: **13.11.2002**
(21) Application number: 02010318.0
(22) Date of filing: 07.05.2002
(51) Int. Cl.: B23K 26/03, B23K 26/08, B23K 26/04, A44C 27/00

(54) **Process and means for working through laser welding with a direct, continuous laser beam, to be used in the jeweller's art**

(30) Priority: 10.05.2001 IT VR20010058
(71) Applicant: F.LLi, Lacchetti, di GianFranco e GianPaolo S.n.c., 36070 Trissino (IT)
(72) Inventor: Lacchetti, GianFranco, 36070 Trissino (IT); Lacchetti, GianPaolo, 36070 Trissino (IT)
(74) Representative: Savi, Alberto

(57) **Abstract**

By utilizing the technology according to the present invention, it is possible to work jewels so as to obtain seats or holes even in a very limited space and with a considerable saving in material and labour.

For instance, it is possible to obtain seats on pipe or omega type jewels on which the laser beam causes the fusion of both the piece and the inner link core with the utmost precision.

In general, the present process is performed by a machine that comprises detecting elements (3) arranged over a jewel-supporting unit (4), a lower moving and adjusting unit, a second optical detecting device (12) and an emission unit (13) that emits a laser beam.

## Description

The present invention proposes a new working laser process to be utilized in the jeweller's art so as to process gold jewels, silver jewels and costume jewels. The structural innovation consists in a laser welding with a direct, continuous laser beam. This process is especially suitable for working jewels, precious objects, semiprecious objects or the like.

This laser working process is performed through a laser equipment of the new generation that has been conceived to treat surfaces that are heated by a laser light of class 4 that becomes light of class 1 when the equipment is closed so that a modification is caused to the material of the surface.

In comparison with the known solutions of the prior art, the working process according to the present invention permits to reach new results in the field of the gold and silver jeweller's art, there being several advantages due to a very particular treatment of the jewel surface or to the execution of holes or the like.

As is known, today the laser working is very diffused in industry where the laser is utilized in particular to cut sheets or plates. In addition, the laser welding is being diffused very rapidly, especially to treat materials such as stainless steel and light alloys.

There are several possibilities of use for the laser technologies in the field of planning and production of gold objects, silver objects and jewels as for the incision and cutting of slabs, blocks, semifinished products, rough stones, models, finished objects and so on.

However, the typology of the laser machines known till today for the working of gold permits a limited use of this technology in this field because till today no system has been conceived to analyse the object to be worked and to perform processes of high precision such as the perforation, cutting, preparation of seats where precious stones are set and surface working of jewels in general according to a pre-detected shape.

The aim of the present invention is, therefore, to remove the above limits of the prior art by utilizing a technology that is not new in itself but is applied to processes of new conception for a controlled working of gold, silver, costume jewels such as chains, chainlets, necklaces including pipe or omega type necklaces or the like.

An immediate advantage of a system according to the present invention is to offer both a machine and a technology for carrying out any kind of working through an initial phase for detecting an object.

Then, the structural features of the object are analysed, processed and transmitted as working code to the laser tool so that the laser tool can carry out operations of any kind and deeply on the jewel to be processed.

By utilizing a technology according to the present invention it is thus possible to work jewels so as to obtain seats or holes, even in very limited spaces, with a considerable saving in material and labour. For instance, it is possible to obtain seats on pipe or omega type jewels on which the laser beam causes the fusion of both the piece and the inner link core with the utmost precision.

All the above aims and advantages are reached according to the present invention by means of a process and relevant means for working through laser welding with a direct, continuous laser beam, to be utilized to process gold, silver, costume objects or the like, characterized by the fact of utilizing a machine comprising at least a laser tool and at least two optical detectors, the former being suitable for detecting the object to be worked, the latter being suitable for detecting the position of the object during the working phases, and by the fact that the said detecting, incising and working units are coupled with a movable piece holder that basically consists of a circular turn-table or the like, actuated by a step by step motor or the like and supported by a suitable base, there being also the possibility of a slide and/or an adjustment along three axes.

Further features and details of the invention can be better understood from the following description, given as a non-limiting example with reference to the accompanying drawings wherein:

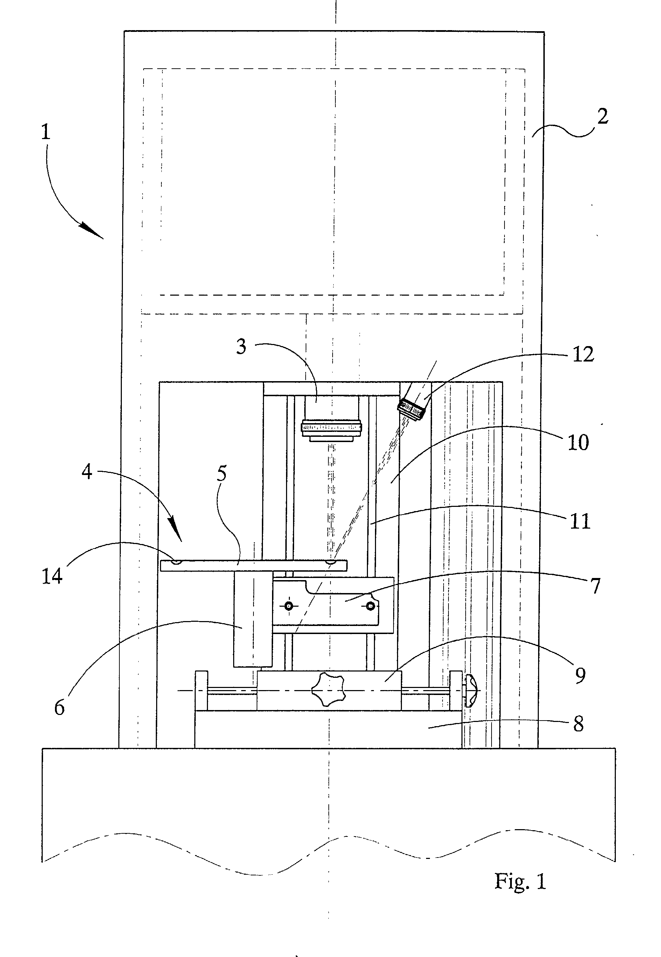

Figure 1 is a schematic front view of a suitable machine for carrying out a process according to the invention;

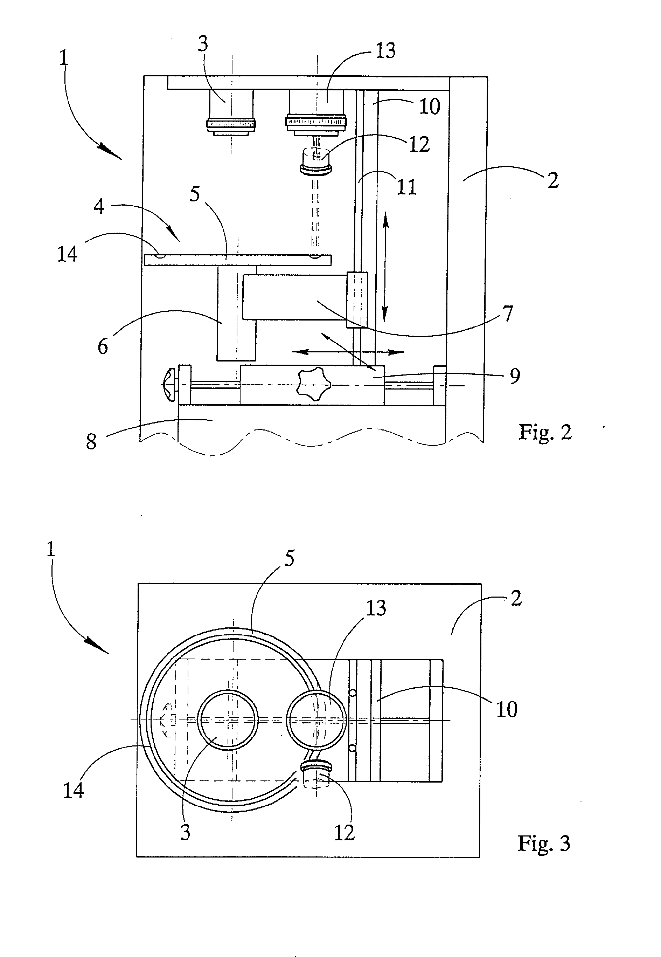

Figure 2 is a schematic side view of the machine;
Figure 3 is a schematic plan view of the machine.

With reference to the accompanying drawings, number 1 denotes a laser welding machine on the whole, provided with a direct, continuous laser beam. In particular, this machine is used in the working of gold, silver and costume jewelry to perform a process according to the invention.

The present machine comprises a frame 2 such as a floor frame. Inside the fram 2 there are the detecting, working and supporting components.

Firstly, the detecting components are represented by an optical objective 3 that is part of a telecamera or the like and is arranged in the upper part of the working chamber along a vertical axis.

More precisely, the optical objective 3 is placed over a supporting unit 4 that is arranged in the lower part of the working chamber to support the piece to be worked.

The supporting unit 4 comprises a circular turn-table 5 that is placed along the vertical axis of a step by step motor 6.

The step by step motor is supported through a stirrup 7 by a lower moving and adjusting unit, arranged on the base of the working chamber.

The lower moving and adjusting unit comprises a first base 8 that, in turn, supports a base 9, A vertical column 10 is placed on the base 9. The stirrup 7 is placed on guides 11 of the vertical column 10 to support and rotate the turn-table 5.

The bases 8 and 9 comprise adjusting means along orthogonal axes of the column 10 so that the turn-table can be moved and adjusted along three orthogonal axes.

Finally, the machine comprises a second optical detecting device 12 and an emitting unit 13 for the emission of a laser beam.

The turn-table 5 has a suitable surface to support the piece to be worked, for instance the turn-table 5 is provided with a circular groove 14 having a suitable shape for containing the piece to be worked.

The so-described system is controlled by a data processing station that processes the detected data and turn them into laser pulses of an appropriate power. The laser pulses are transmitted towards the piece which is moved with the utmost precision through the lower moving and adjusting unit.

The working of the jewel is accomplished in four phases, subdivided according to different times and typologies and completed by manual, mechanical and data processing contribution.

Concerning the first phase, firstly both the mechanical part and the data processing part of the machine are actuated. Then, the piece to be worked such as a necklace or a bracelet is positioned on the turn-table 5.

It is to be noted that the turn-table 5 has been conceived to satisfy the operative requirements of the working on taking into account the structural changes caused by the laser beam that operates by effecting continuous returns depending on the wished depth.

Now, a first telecamera 3 detects the section in question and the vertical centering is done manually by acting on adjusters of a lower calibrating unit of the bases 8 and 9.

In the second phase, the operator inserts the data in the software programme on taking into account the diameter parameters and the dimensions of the piece to be worked.

For a good execution of the programme it is important that the inserted parameters correspond to the piece segment to be worked as much as possible.

The third phase consists in a mechanical sliding of the main unit 4, formed by the turn-table 5, the supporting stirrup 7 and the step by step motor 6. The main unit 4 goes from the first telecamera 3 to the second telecamera 12. The second telecamera 12 detects the section of the piece segment and transmits the horizontal centering data to the software.

Once the correct parameters are determined, a shutter protects the detecting telecamera 12 from the laser beam coming from the unit 13.

The laser beam coming from the optical unit 13 placed vertically over the piece segment concerned starts automatically and follows the data that the operator had inserted previously.

The fourth phase (last phase) consists in the sliding of the turn-table 5 that returns under the first telecamera and is subjected to a direct control by the operator.

Of course, the programme includes several types of working such as single workings, continuous workings and progressive workings.

The whole operation is carried out under a close inspection by a responsible technician as well as under the control of the central software.

It is very important to perfectly set up the laser power of the laser beam coming from the unit 13 because in this way, it is possible to obtain a welding between the inner material and the outer metal of the necklace or bracelet.

Inside the hole, the so-obtained welding creates a stronger seat which reinforces the structure of the base in which the gem or precious stone is to be set.

The above kind of working is completely innovating in this field because it is accomplished in a very short time and utilizes a new welding method that reinforces the product. The quality and functionality of the so-obtained product are improved and therefore, it is possible to obtain a result that has never been reached before in the field of gold and silver working.

In addition, concerning the visual appearance, the so-obtained product is innovating since it shows a structural quality and harmony.

## Claims

1. Process and means for working through laser welding with a direct, continuous laser beam, to be utilized to process gold, silver, costume objects or the like, **characterized by** the fact of utilizing a machine comprising at least a laser tool (13) and at least two optical detectors (3, 12), the former being suitable for detecting the object to be worked, the latter being suitable for detecting the position of the object during the working phases, and by the fact that the said detecting, incising and working units are coupled with a movable piece holder (4) that basically consists of a circular turn-table (5) or the like, actuated by a step by step motor (6) or the like and supported by a suitable base, there being also the possibility of a slide and/or adjustment along three axes.

2. Process and means for working through laser welding as claimed in claim 1, **characterized by** the fact that the detecting components are represented by an optical objective (3) that is part of a telecamera or the like and is arranged in the upper part of the working chamber along a vertical axis, namely, the optical objective (3) is placed over a supporting unit (4) that is arranged in the lower part of the working chamber to support the piece to be worked.

3. Process and means for working through laser welding as claimed in the foregoing claims, **characterized by** the fact that the piece-supporting unit (4) comprises a circular turn-table (5) which is placed along the vertical axis of a step by step motor (6) which in turn is supported through a stirrup (7) by a lower moving and adjusting unit, arranged on the base of the working chamber.

4. Process and means for working through laser welding as claimed in the foregoing claims, **characterized by** the fact that the said lower moving and adjusting unit comprises a first base (8) which in turn supports a base (9), a vertical column (10) being placed on the base (9), the said stirrup (7) being placed on guides (11) of the vertical column (10) to support and rotate the turn-table (5).

5. Process and means for working through laser welding as claimed in the foregoing claims, **characterized by** the fact that the said bases (8, 9) comprise adjusting means along orthogonal axes of the column (10) so that the turn-table (5) can be moved and adjusted along three orthogonal axes.

6. Process and means for working through laser welding as claimed in the foregoing claims, **characterized by** the fact that the whole system is controlled by a data processing station that processes the detected data and turn them into laser pulses of an appropriate power, the laser pulses being transmitted towards the piece which is moved with the utmost precision through the lower moving and adjusting unit.

7. Process for working through laser welding as claimed in the foregoing claims, **characterized by** the following operative phases:
- first phase: firstly, both the mechanical part and the data processing part of the machine are actuated. Then, the piece to be worked such as a necklace or a bracelet is positioned on the turn-table (5). Now, a first telecamera (3) detects the section in question and the vertical centering is done manually by acting on adjusters of a lower calibrating unit of the bases (8,9);
- second phase: the operator inserts the data in the software programme on taking into account the diameter parameters and the dimensions of the piece to be worked;
- third phase: this phase consists of a mechanical sliding of the main unit (4), formed by the turn-table (5), the supporting stirrup (7) and the step by step motor (6). The main unit (4) goes from the first telecamera (3) to the second telecamera (12) which detects the section of the piece segment and transmits the horizontal centering data to the software. Once the correct parameters are determined, a shutter protects the detecting telecamera (12) from the laser beam coming from the unit (13);
- fourth phase (last phase): this phase consists in the sliding of the turn-table (5) that returns under the first telecamera and is subjected to a direct control by the operator.
